Europäisches Patentamt

European Patent Office

Office européen des brevets

(19)

(11) Publication number: **0 045 829**
A1

(12) **EUROPEAN PATENT APPLICATION**

(21) Application number: **80830067.7**

(22) Date of filing: **13.08.80**

(51) Int. Cl.³: **B 60 D 1/14**

(43) Date of publication of application:
**17.02.82 Bulletin 82/7**

(84) Designated Contracting States:
**AT BE CH DE FR GB LI LU NL SE**

(71) Applicant: **Manganelli, Benso**
**Via Monginevro 254**
**Torino(IT)**

(72) Inventor: **Manganelli, Benso**
**Via Monginevro 254**
**Torino(IT)**

(74) Representative: **Fiammenghi, Carlo et al,**
**c/o Fiammenghi-Fiammenghi via Quattro Fontane 31**
**I-00184 Roma(IT)**

(54) Stabilizing bar for two-wheel trailers.

(57) A stabilizing device for two-wheel trailers including a braking plate (7) pivoted on the trailing car, a stabilizing bar (1) hitched to the trailer and able to rotate about an axis (2) mounted on the braking plate (7), the stabilizing bar (1) being provided with one or more pairs of braking means (4) which press on said plate (7) and prevent the trailer from the side skids.

FIG.1

EP 0 045 829 A1

- 1 -

Stabilizing bar for two-wheel trailers

The present invention relates to a stabilizing device for the control and the stabilization of the side skids of the two-wheel trailers.

More particularly, the invention relates to a stabilizing device comprising a stabilizing bar, which is hitched to the trailer and is able to rotate about an axis mounted on a braking plate. This stabilizing bar is provide with one or more brake pairs which press on the plate and prevent the trailer from the side skids.

The pressure on the plate is adjustable. As well known the tow of the two-wheel trailers causes unavoidable side skids and other uncontrollable movements of the trailer due to the roadway unevennes, bad weather, overtakings, drive errors. The movements of the running trailer are not always controllable by the driver and can cause accidents of various type. At the present time, stabilizing devices for two-wheel trailers are used which are based on pairs of dampers mounted near the trailing hook. These devices based on the use of dampers have the drawback to be not adjustable and to permit only a little angle of rotation of the trailer with respect to the trailing car.

The stabilizing device according to the present invention permits to control effectively the side skids and has the advantage to be adjustable depending on the load of the trailers, the road and the weather conditions, the driver's habits and also permits a wide angle of rotation of the trailer with respect to the trailing car.

According to the present invention it is provided a braking plate pivoted on the trailing car, a stabilizing bar hitched to the trailer and able to rotate about an axis mounted on the braking plate, said stabilizing bar being provided with one or more pairs of braking means which press on said plate and prevent the trailer from the side skids.

These and other features of the present invention will be apparent on the basis of the following description of a preferred embodiment of the device according to the present invention with reference to the annexed drawings. The description is only by way of example and therefore is neither limitative nor restrictive.

In the drawings:

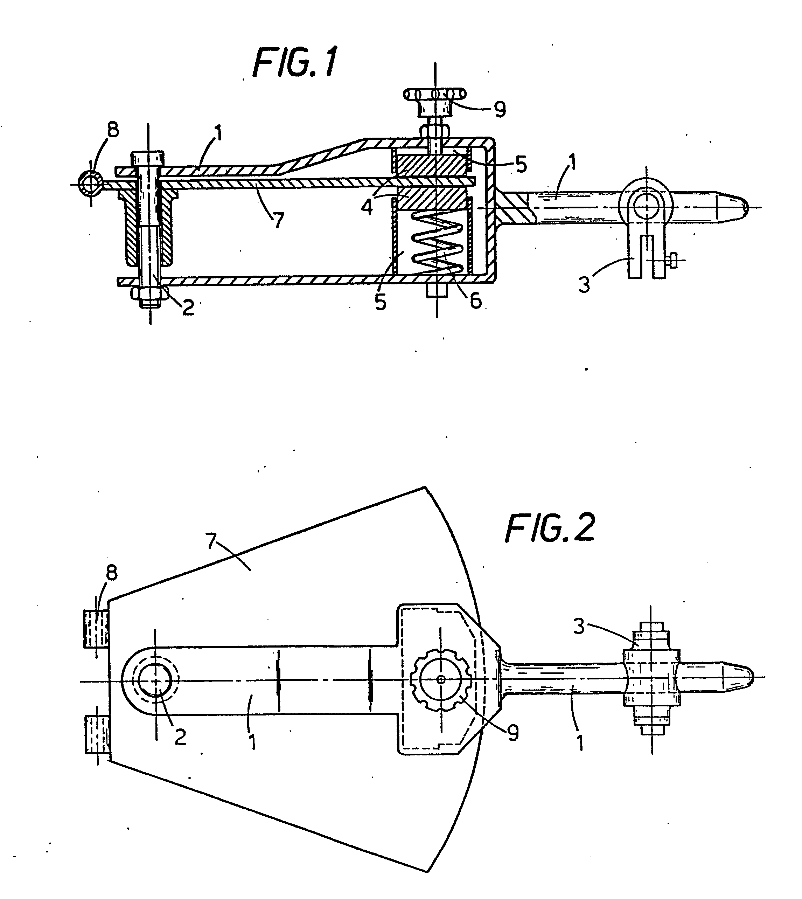

Fig. 1 is a longitudinal section of the device according to the present invention; Fig. 2 is a top view of the device according to the presente invention.

The stabilizing bar 1 rotates about the pin 2 when the trailer skids sidewise since the latter is hitched to the bar by means of the joint 3. This joint 3 allows the trailer to shake and to rotate with respect to the trailing car.

The stabilizing bar 1 is provided, for example, with a pair of brake linings 4 which can move within the seat 5 and are held under the pressure of a spring 6 on a plate 7 through which the pin 2 presses. The plate 7 is locked in the hitch of the car by means of the hinge 8.

It is evident that the movements of the trailer are braked by the pair of linings to a greater or lesser extent depending on the pressure on the plate 7. The pressure is adjustable by means of the knob 9 which is screwed in the stabilizing

- 3 -

bar 1 and presses on the brake lining 4. The screwing and
the pressure of the knob 9 should keep into account the weight
of the trailer, the road and weather conditions, the driver's
habits.

With the above described device the trailer can be braked
at pleasure in its horizontal movement and can be prevented
from sharp and dangerous side skids.

Claims

1. A stabilizing device for two-wheel trailers characterized by the fact that a stabilizing bar hitched to the trailer is able to rotate about an axis mounted on a plate which is hinged to the trailing car or to the hitch, said stabilizing bar being provided with one or more pairs of braking means which press on said plate and brake the rotation thereof caused by the movements of the trailer with respect to the trailing car.

2. A stabilizing device for two-wheel trailers according to claim 1, characterized by the fact that said braking means of said stabilizing bar press on said plate with an adjustable intensity, the adjustment being provided by a knob which can act on spring means pressing on said braking means which are mounted within seats formed to permit the movement thereof.

3 - A stabilizing device for two-wheel trailers according to claim 1, characterized by the fact that the stabilizing bar is connected to the trailer by a jointing means which allows the rotating and shaking movements of the stabilizing bar.

FIG.1

FIG.2

**0045829**

Application number

EP 80 83 0067

## EUROPEAN SEARCH REPORT

European Patent Office

| | DOCUMENTS CONSIDERED TO BE RELEVANT | | | CLASSIFICATION OF THE APPLICATION (Int. Cl.³) |
|---|---|---|---|---|
| Category | Citation of document with indication, where appropriate, of relevant passages | Relevant to claim | | |
| X | DE - A - 2 529 262 (WOLFANGEL)<br>* Page 4, line 1 - page 6, line 11; figures 1,2 * | 1-3 | | B 60 D 1/14 |
| X | DE - A - 2 745 524 (PERSYN)<br>* Page 12; figures 1,5,6,8,9 * | 1,2 | | |
| X | DE - A - 2 513 074 (ROHSIEPE)<br>* Whole document * | 1,2 | | |
| | | | | **TECHNICAL FIELDS SEARCHED (Int Cl.³)** |
| X | US - A - 4 003 586 (LUCK)<br>* Abstract * | 1,2 | | B 60 D |
| X | DE - A - 2 527 673 (OKUNEK)<br>* Claims 1-3 * | 1,2 | | |
| X | FR - A - 2 044 031 (BRISARD)<br>* Whole document * | 1 | | |

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 30-06-1981 | BEERNAERT |

EPO Form 1503.1    06.78